# EUROPÄISCHE PATENTSCHRIFT

(11) **EP 2 125 543 B1**
(45) Veröffentlichungstag und Bekanntmachung des Hinweises auf die Patenterteilung: **02.05.2012**
(21) Anmeldenummer: 08715536.2
(22) Anmeldetag: 03.03.2008
(51) Int. Cl.: B65D 8/00, B65D 39/08

(54) **BEHÄLTER**
CONTAINER
RECIPIENT

(30) Priorität: 14.03.2007 DE 102007012698
(43) Veröffentlichungstag der Anmeldung: 02.12.2009
(73) Patentinhaber: Schöne, Eckhard, 06571 Wiehe (DE)
(72) Erfinder: Schöne, Eckhard, 06571 Wiehe (DE)
(74) Vertreter: Donath, Dirk
(86) Internationale Anmeldenummer: PCT/DE2008/000387
(87) Internationale Veröffentlichungsnummer: WO 2008/110141

(56) Entgegenhaltungen:
- FR-A- 2 380 193
- GB-A- 171 834
- GB-A- 2 183 593
- US-A- 1 480 689
- US-A- 2 031 153
- US-A- 2 952 377
- US-A- 3 667 639
- US-A- 4 826 029

## Beschreibung

Die Erfindung betrifft einen Behälter, insbesondere seine Verwendung.

Gemäß dem Stand der Technik sind luftdicht geschlossene Behälter aus Kunststoff oder Stahl mit verschiedensten Formen von Revisionsöffnungen, Rohranschlüssen etc. bekannt.

Ebenso sind in der Holzbranche bauchige Holzfässer mit rundem bis ovalen Querschnitt und zwei geschlossenen Böden bekannt.

Auch sind Bottiche oder Kübel mit kegelstumpfförmiger oder zylindrischer Form mit einem Boden, meist als stehende Gefäße, bekannt. Man kennt dabei auch die Möglichkeit, stehende Holzbottiche mit einem oberen Boden (Deckel) in Falzbodenform zu verschließen.

Für den Qualitätsausbau von Wein sind bspw. seit Jahrhunderten verschiedenste Holzfässer bekannt.
Der Nachteil dieser Holzfässer ist, dass diese keine einfach zu handhabenden Revisionsöffnungen aufweisen, was zu deren schlechter mehrmaliger Öffnung / Schließung führt.

Derzeit ist nur eine Variante der Kombination von Holz und Edelstahl bei großen, konventionell gebauten Lagerfässern bekannt, nämlich eine Edelstahlpforde, die auch Türchen genannt wird.

Darüber hinaus werden seit vielen Jahren im industriellen Weinherstellungsprozess Metall-, insbesondere Edelstahltanks verwendet, wobei in diesen Tanks kein Qualitätsausbau, wie in Holzfässern, bspw. Eichenfässern, möglich ist.
Der Vorteil dieser Fässer gegenüber den traditionellen Holzfässern ist jedoch, das sie sehr gut mehrmalig geöffnet. / verschlossen werden können.

Die Schrift DE 11 06 677 Cl offenbart einen Flüssigkeitsbehälter von Kreiszylinderform aus Holz mit einer äußeren Metallwand, der aus mehreren koaxialen Kreiszylinderschalen besteht und bei dem die Holzfasern in jeder Schicht in einer einzigen Richtung parallel zur Schichtebene verlaufen und die Richtungen der Fasern in benachbarten schichten im rechten Winkel zueinander liegen, wobei die Fasern der innersten Schicht parallel zur Krümmungsachse verlaufen und wobei der Behälter zwei koaxiale Kreiszylinderschalen aus Balsaholz hat, von denen jede aus einer Anzahl von stirnseitig aneinander gesetzten Ringen hergestellt ist, wobei jeder Ring von mehreren gleich gebogenen, mehrschichtigen Teilen gebildet wird, und die Verschlüsse des Behälters ebenfalls aus Balsaholz bestehen, welches in Schichten senkrecht zur Längsachse des Behälters angeordnet sind.

Die Schrift FR 892 262 Cl offenbart einen kegelstumpfartigen Behälter, zu dessen Zusammenhalt Befestigungsstreifen benötig werden.

Aus der Schrift US 1 334 186 ist ein Behälter bekannt, der eine Kreiszylinderform aufweist und zu dessen Zusammenhalt ebenfalls Befestigungsstreifen vorgesehen sind.

Die Schrift US 3 462 038 offenbart einen Behälter, der im Wesentlichen einen quadratischen Querschnitt besitzt, bei dem die Dauben durch Halteringe zusammengehalten werden.

Die Schrift DE 102 19 049 A1 offenbart einen zerlegbaren Behälter, insbesondere einen Bottich, der aus Dauben gebildet ist.

Aus der GB 2 380 193 A ist ein Behälter bestehend aus einer Behälterwand, einem Deckel oder einem Oberteil und einem Boden oder einem Unterteil bekannt, wobei der Deckel oder das Oberteil und der Boden oder das Unterteil durch die Behälterwand gehaltert werden und die Behälterwand aus Holz und der Deckel oder das Oberteil und der Boden oder das Unterteil aus Edelstahl bestehen, um die Herstellungskosten durch die Senkung des Holzanteils und durch die Senkung des Anteils an Abfall zu verringern.

Der Erfindung liegt die Aufgabe zugrunde, einen Behälter sowie dessen neuartige Verwendung anzugeben, der eine luftdichte Lagerung von Stoffen / Produkten, bspw. bei Gär- und Reifeprozessen ermöglicht und die Nachteile des zuvor sehend genannten Standes der Technik vermeidet, insbesondere eine gute Handhabarkeit sowie eine gute mehrmalige Öffnung und Schließung von Holzgefäßen gewährleistet.

Die Aufgabe der Erfindung wird durch die Merkmale des ersten Patentanspruchs gelöst. Vorteilhafte Ausgestaltungen sind Gegenstand der nachgeordneten Ansprüche.

Das Wesen der Erfindung besteht in der Kombination eines zylindrischen bzw. fassartigen, an beiden Seiten offenen Behälters aus Holz mit einem Boden und/oder Deckel aus Metall, insbesondere Edelstahl, der mit Revisionsöffnungen versehen ist, vermittels derer der Behälter luftdicht verschließbar und mehrfach öffen- und wieder verschließbar ist.

Der Boden und / oder der Deckel können dabei neben den Revisionsöffnungen mit zusätzlichen Armaturen oder ähnlichen, von den Stahltanks bekannten Zusatzvorrichtungen in bekannter Weise versehen sein.

Die vorliegende Erfindung hat den Vorteil, dass der vorgeschlagene Behälter einen Holzgrundkörper aufweist, der vermittels Metall-, (insbesondere Edelstahl-) -Boden und / oder -Deckel, welche Revisionsöffnungen aufweisen, luftdicht verschließbar und dabei mehrfach gut öffen- und schließbar ist.
Damit vereint die Kombination des Holzgrundkörpers mit den Metalldeckel und / oder -boden, welche zumindest eine Revisionsöffnungen aufweisen, die Vorteile von Holz- und Edelstahlgefäßen in sich.

Die Behältervolumina der erfindungsgemäßen Gefäße können dabei in Bereichen von bis zu 1.500 bis 20.000 Litern liegen.

Die Erfindung soll nachstehend anhand der Ausführungsbeispiele und der Figuren näher erläutert werden. Es zeigen:
- Fig. 1: eine erste Ausführungsform eines erfindungsgemäßen Behälters in teilweise geschnittener Seitenansicht,
- Fig. 2: eine zweite Ausführungsform eines erfindungsgemäßen Behälters in teilweise geschnittener Seitenansicht und
- Fig. 3: eine dritte Ausführungsform eines erfindungsgemäßen Behälters in teilweise geschnittener Seitenansicht.

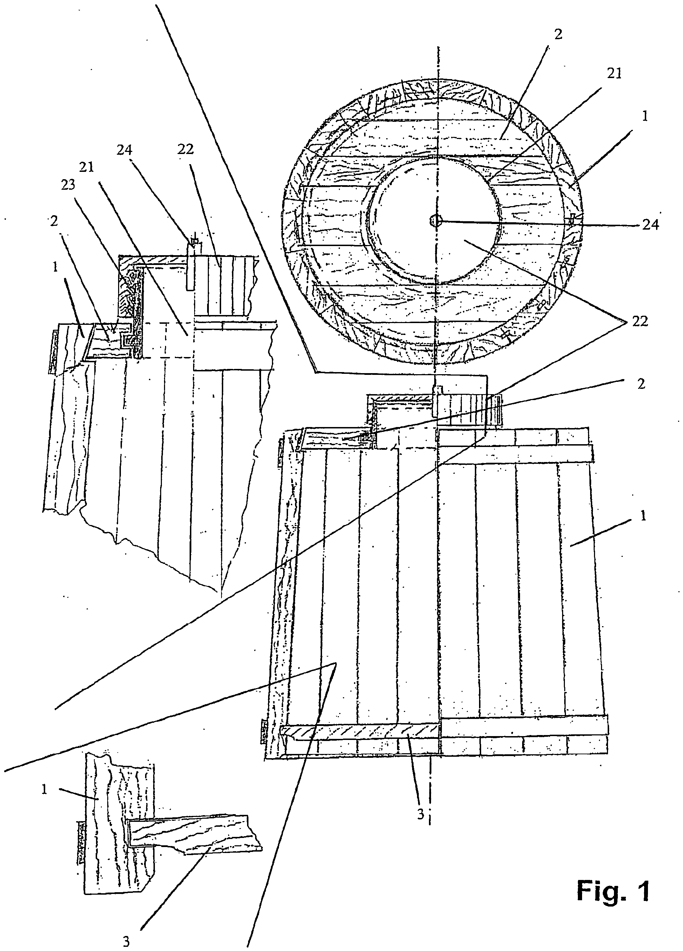

Figur 1 zeigt eine erste Ausführungsform eines erfindungsgemäßen Behälters in teilweise geschnittener Seitenansicht.

Der Behälter ist aus einer Behälterwand 1, einem Deckel 2, vorzugsweise aus Holz, mit kleiner Öffnung 21 und einem Boden 3 aufgebaut. In der Öffnung 21 des Deckels 2 befindet sich dichtend eingebaut ein Revisionsverschluss 22, der aus Metall, insbesondere Edelstahl oder aus Kunststoff besteht. Vorteilhaft ist die Öffnung 21 des Deckels 2 an der Außenseite mit einer Falz zur dichtenden Aufnahme des Revisionsverschlusses 22, welcher ein Nut trägt, die in die Falz greift, ausgebildet.

Die Behälterwand 1 besteht besonders vorteilhaft, genau wie der Deckel 2 aus Holz. Dabei kann die Behälterwand 1 bspw. aus einzelnen Dauben mit stumpfer Fuge oder Nut oder Feder bestehen.

Der Boden 3 besteht aus Holz. Alternativ dazu kann er aber auch aus Metall, insbesondere Edelstahl, oder aus Kunststoff bestehen. Auf Grund der Belastung kann der Boden vorteilhaft aus einem rund gewölbten Edelstahl gefertigt sein.

Dieser Boden 2 ist gemäß dem Stand der Technik konventionell in die Behälterwand 1 dichtend eingebunden.

Der Deckel 2 ist über eine schräge Falz flachbündig mit Flach- oder Rundstahlstreifen mit Spannschlössern in Behälterwand 1 eingebunden. Die dichtende Verbindung zwischen der Öffnung 21 des Deckels 2 und dem Revisionsverschluss 22 ist bspw. ein Schraubverschluss 23 mit Dichtelementen.

Für spezielle Verwendungszwecke des erfindungsgemäßen Behälters kann der Revisionsverschluss 22 mit einem Druckventil 24 versehen sein.

Der Vorteil dieser Ausführungsform for insbesondere kleine, bewegliche und transportable Behälter besteht in der möglichen Standardisierung des Revisionsverschluss 22 unabhängig vom Behälterdurchmesser.

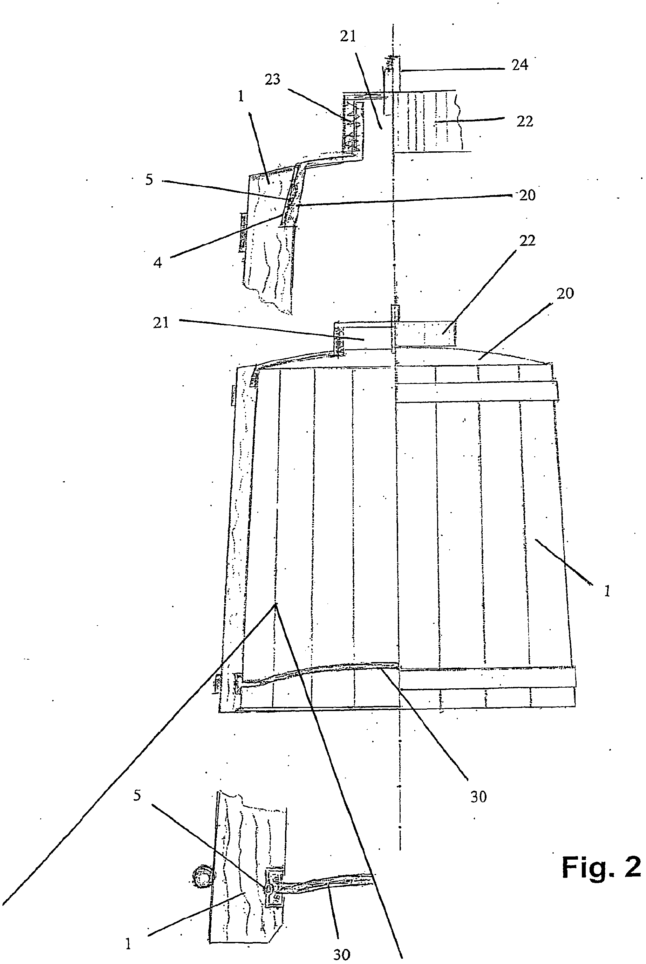

Figur 2 zeigt eine zweite Ausführungsform eines erfindungsgemäßen Behälters in teilweise geschnittener Seitenansicht.

Der Behälter ist aus einer Behälterwand 1, einem Deckel 2 in Form eines Oberteils 20 aus Edelstahl mit Revisionsverschluss 22 und einem rund gewölbten Boden 3 aus Edelstahl aufgebaut.

Die Behälterwand 1 besteht besonders vorteilhaft aus Holz. Dabei kann die Behälterwand 1 bspw. aus einzelnen Dauben mit stumpfer Fuge oder Nut oder Feder bestehen und weist auf ihrer zum Oberteil 20 gerichteten Seite eine schräge Falz 4 mit Sikke und Dichtung 5 zur dichtenden Aufnahme des Oberteils 20 auf.

Der Boden 3 weist ein umlaufendes, senkrechtes Flachprofil mit Sicke 31 auf. Diese Sicke 31 dient der Aufnahme eines in der Figur nicht dargestellten Dichtmittels.

Auf Grund der Belastung ist der Boden vorteilhaft aus einem rund gewölbten Edelstahl gefertigt sein.

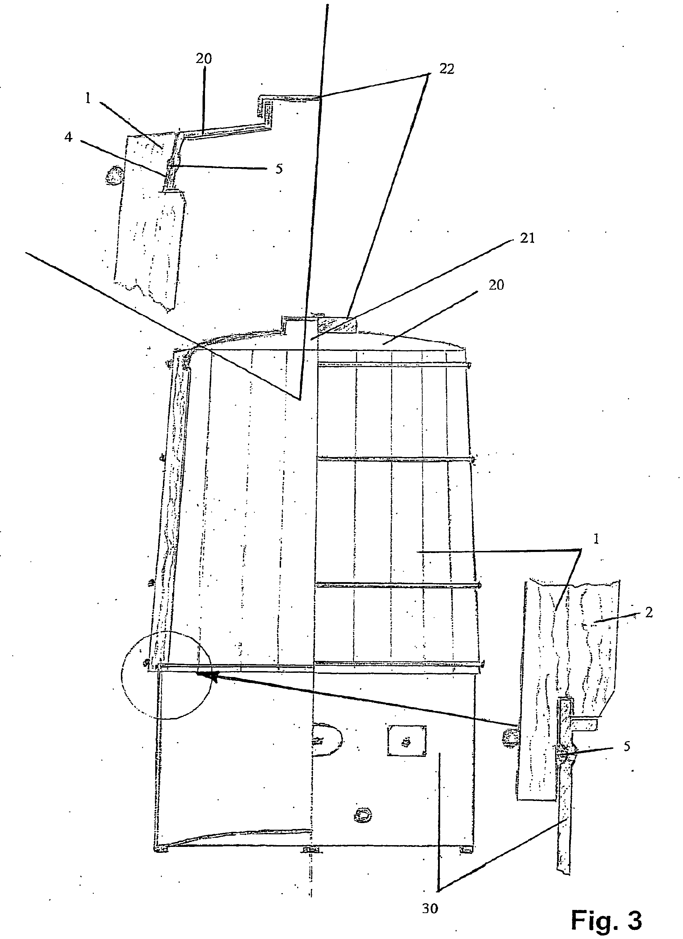

Figur 3 zeigt eine dritte Ausführungsform eines erfindungsgemäßen Behälters in teilweise geschnittener Seitenansicht.

Der Behälter ist aus einer Behälterwand 1, die im Beispiel aus Dauben besteht, gebildet und an seinen beiden Öffnungen mit einem Oberteil 20 und einem Unterteil 30 eines Edelstahltanks dichtend verbunden.

Das Oberteil 20 ist wie unter Figur 2 ausgeführt in die Behälterwand 1 eingebunden und trägt zumindest einen Revisionsverschluss 22.

Dabei besteht die Behälterwand 1 besonders vorteilhaft aus Holz und kann bspw. mit Flach- bzw. Rundstahlreifen und Spannschlössern verspannt sein.

Der Vorteil dieser erfinderischen Lösung besteht darin, dass der Behälter nicht einstückig ist, wie bspw. ein Edelstahltank, so dass der erfindungsgemäße Behälter in seinen Einzelteilen im zerlegten Zustand in schlecht zugängliche Räume, bspw. Weinkellergewölbe mit schmaler Eingangstreppe, transportiert und dort vor Ort zusammengesetzt werden kann. Gleichzeitig vereint der erfindungsgemäße Behälter die Vorteile des Holzweinfasses (Ausbau der Weingeschmacksnote) und die Vorteile des Stahltanks (Revisionsöffnung; Kühlmöglichkeiten etc.).

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1 -: Behälterwand
- 2 -: Deckel
- 20 -: Oberteil
- 21 -: Öffnung
- 22 -: Revisionsverschluss
- 23 -: Schraubverschluss
- 24 -: Druckventil
- 3 -: Boden
- 30 -: Unterteil
- 31 -: Sicke
- 4 -: Falz
- 5 -: Dichtung

## Patentansprüche

1. Verwendung eines Behälters bestehend aus einer Behälterwand (1), einem Deckel (2) oder einem Oberteil (20) und einem Boden (3) oder einem Unterteil (30), wobei der Deckel (2) oder das Oberteil (20) und der Boden (3) oder das Unterteil (30) durch die Behälterwand (1) dichtend gehaltert werden, und wobei die Behälterwand (1) aus Holz und der Boden (3) oder das Unterteil (30) und/oder der Deckel (2) oder das Oberteil (20) aus Edelstahl bestehen und der Deckel (2) oder das Oberteil (20) zumindest eine Öffnung (21) mit einem Revisionsverschluss (22) aus Edelstahl besitzt, wobei der Revisionsverschluss (22) dichtend in die Öffnung (21) des Deckels (2) oder des Oberteils (20) eingebaut ist, wobei die Behälterwand (1) aus Dauben besteht und an ihren beiden Öffnungen mit dem Oberteil (20) und dem Unterteil (30) eines Edelstahltanks dichtend verbunden ist, wobei der Behälter
im zerlegten Zustand in schlecht zugängliche Räume transportiert wird und in diesen Räumen zusammengebaut wird, so dass der Behälter zum Ausbau der Weingeschmacksnote nach Beflüllung mit Wein sowie zur Handhabung des Weines durch die Revisionsöffnung sowie zum Kühlen des Weines verwendet werden kann.

2. Verwendung des Behälters gemäß Anspruch 1, **dadurch gekennzeichnet, dass** der Deckel (2) oder das Oberteil (20) über eine schräge Falz flachbündig mit Flach- oder Rundstablstreifen mit Spannschlössern in die Behälterwand (1) eingebunden ist.

3. Verwendung des Behälters gemäß Anspruch 2, **dadurch gekennzeichnet, dass** das Unterteil (30) eine Sicke aufweist, in der ein Dichtung (5) gelagert ist. ,

4. Verwendung des Behälters gemäß Anspruch 3, **dadurch gekennzeichnet, dass** das Oberteil (20) zumindest einen Revisionsverschluss (22) in Form einer Revisionsklappe besitzt.

5. Verwendung des Behälters gemäß einem oder mehrerer der voran stehenden Ansprüche 1 bis 4, **dadurch gekennzeichnet, dass** der Revisionsverschluss (22) ein Ventil (24) aufweist.

## Claims

1. Use of a cask consisting of a cask wall (1), a cover (2) or an upper part (20) and a bottom (3) or a bottom part (30), and the cover (2) or the upper part (20) and the bottom (3) or the bottom part (30) are sealingly supported by the cask wall (1) that is made of wood and the bottom (3) or the bottom part (30) and/or the cover (2) or the upper part (20) are/is made of high-grade steel and the cover (2) or the upper part (20) has at least one opening (21) provided with an inspection closure (22) of high-grade steel, and said inspection closure (22) is sealingly installed into the opening (21) of the cover (2) or of the upper part (20), and the cask wall (1) is composed of staves and its two openings are tightly connected with the upper part (20) and the bottom part (30) of a high-grade steel tank, and the cask is transported in disassembled condition into rooms that are difficult to access and is assembled in these rooms so that the cask can be used for developing the taste of the vine after being filled with vine, for handling the vine through the inspection opening, and for cooling the vine.

2. Use of the cask according to claim 1, wherein the cover (2) or the upper part (20) is incorporated by flat or round steel stripes provided with turnbuckles into the cask wall (1) via an oblique fold.

3. Use of the cask according to claim 2, wherein the bottom part (30) has a bead that supports a gasket (5).

4. Use of the cask according to claim 3, wherein the upper part (20) is provided with at least one inspection closure (22) in the form of an inspection flap.

5. Use of the cask according to one or several of the claims 1 through 4, wherein the inspection closure (22) is equipped with a valve (24).

## Revendications

1. Utilisation d'un récipient qui se compose d'une paroi de récipient (1), un couvercle (2) ou partie supérieure (20) et un fond (3) ou partie inférieur (30), le couvercle (2) ou la partie supérieure (20) et le fond (3) ou la partie inférieure (30) étant supportés à ajustement étanche par le paroi de récipient (1), et le paroi de récipient (1) se composant de bois et le fond (3) ou la partie inférieure (30) et/ou le couvercle (2) ou la partie supérieure (20) se composant d'acier inoxydable et le couvercle (2) ou la partie supérieure (20) possédant au moins une ouverture (21) avec une fermeture de révision (22) en acier inoxydable, qui est montée de façon étanche dans l'ouverture (21) du couvercle (2) ou de la partie supérieure (20), et le paroi de récipient (1) se composant des douelles et ses deux ouvertures étant attachées de façon étanche à la partie supérieure (20) et la partie inférieure (30) d'un réservoir en acier inoxydable, et le récipient étant transporté en état désassemblé dans les locaux difficilement accessibles et monté dans ce locaux de sorte que le récipient puisse être utilisé pour le développement du goût caractéristique du vin après être rempli de vin ainsi que pour le maniement du vin par l'ouverture de révision ainsi que pour le refroidissement du vin.

2. Utilisation du récipient suivant la revendication 1 est **caractérisée en ce que** le couvercle (2) ou la partie supérieure (20) est intégrée à surface affleurée dans la paroi de récipient (1) par une feuillure inclinée avec bandes en acier plat ou rond avec tendeurs.

3. Utilisation du récipient suivant la revendication 2 est **caractérisée en ce que** la partie inférieure (30) est munie d'une moulure dans laquelle se trouve un joint (5).

4. Utilisation du récipient suivant la revendication 3 est **caractérisée en ce que** la partie supérieure (20) possède au moins une fermeture de révision (22) sous forme d'un clapet de révision.

5. Utilisation du récipient suivant une ou plusieurs des revendications précédentes 1 à 4 est **caractérisée en ce que** la fermeture de révision (22) est munie d'une soupape (24).
